# EUROPÄISCHE PATENTSCHRIFT

(11) **EP 4 036 447 B1**
(45) Veröffentlichungstag und Bekanntmachung des Hinweises auf die Patenterteilung: **24.01.2024**
(21) Anmeldenummer: 21154084.4
(22) Anmeldetag: 28.01.2021
(51) Int. Cl.: F16L 3/13, F16L 3/22, H02G 3/32

(54) **ROHRBEFESTIGER**
PIPE FASTENER
DISPOSITIF DE FIXATION DE TUBE

(43) Veröffentlichungstag der Anmeldung: 03.08.2022
(73) Patentinhaber: SOMA GmbH & Co. KG, 72359 Dotternhausen (DE)
(72) Erfinder: Sommer, Frank, 72336 Balingen (DE); Massold, Andreas, 72336 Balingen (DE)
(74) Vertreter: Witte, Weller & Partner Patentanwälte mbB

(56) Entgegenhaltungen:
- EP-A1- 1 744 087
- WO-A1-2017/032764
- DE-A1- 2 624 333
- US-A- 6 109 569

## Beschreibung

Die Erfindung betrifft einen Rohrbefestiger zu einer Befestigung eines Rohrs an einem Befestigungsgrund mit den Merkmalen des Oberbegriffs des Anspruchs 1.

Ein Rohrbefestiger ist beispielsweise eine Rohrschelle oder ein Rohrclip, also etwas, an oder in dem ein Rohr, ein Leerrohr, ein Kabel, ein Schlauch, eine Stange oder dergleichen befestigt werden kann. Der erfindungsgemäße Rohrbefestiger lässt sich an beispielsweise einer Wand, einem Pfosten oder einer Decke als Befestigungsgrund befestigen, so dass mit dem Rohrbefestiger das Rohr oder dergleichen an dem Befestigungsgrund befestigbar ist.

Das US Patent 6,109,569 offenbart einen Rohrclip mit einem Verbindungsclip auf einer und einem Verbindungsfuß auf einer gegenüberliegenden Seite eines Sockels des Rohrclip. Durch Einschnappen des Verbindungsfußes eines Rohrclip in seitlicher Richtung oder Einschieben in einer Längsrichtung in den Verbindungsclip eines weiteren Rohrclip lassen sich grundsätzlich beliebig viele Rohrclipse lösbar miteinander verbinden. Verbundene Rohrclipse sind so nebeneinander angeordnet, dass Achsen von Rohren, die in die Rohrclipse eingeklipst sind, parallel zueinander verlaufen.

Die internationale Patentanmeldung WO 2017/032 764 A1 offenbart einen Rohrverbinder, der zwei Rohrclipse aufweist, die lösbar miteinander verbunden sind. Zum Verbinden weist einer der beiden Rohrclipse eine seitlich abstehenden Verbindungseinrichtung auf, die an einen Halm mit Bart eines Schlüssels erinnert. Als Gegenverbindungseinrichtung weist der andere Rohrclip ein schlüssellochförmiges Durchgangsloch auf, das einen Sockel des Rohrclip quer zum Clip durchsetzt. Zum Verbinden wird die Verbindungseinrichtung des einen Rohrclip soweit durch die Gegenverbindungseinrichtung des anderen Rohrclip gesteckt, dass der "Bart" auf einer gegenüberliegenden Seite austritt und durch eine 90°-Drehung verriegelt. Die verbundenen Rohrclipse verbinden zwei in die Rohrclipse eingeschnappte Rohre rechtwinklig aneinander vorbei verlaufend miteinander.

Die Offenlegungsschrift DE 26 24 333 A1 offenbart einen Rohrclips mit einem seitlich abstehenden Haken und einer gegengleichen Aussparung in einer Befestigungsseite des Rohrclips. Durch eine Verschiebung zweier nebeneinander angeordneter Rohrclipse senkrecht zu ihren Befestigungsseiten lässt sich der Haken des einen Rohrclips in Eingriff in die Aussparung in der Befestigungsseite des anderen Rohrclips bringen und die beiden Rohrclipse miteinander verbinden. Bei einem Versuch, ein eingeschnapptes Rohr aus einem Rohrclips auszuschnappen, können die beiden Rohrclipse unbeabsichtigt voneinander gelöst werden.

Aufgabe der Erfindung ist einen Rohrbefestiger vorzuschlagen, der auf beiden Seiten mit einem weiteren, baugleichen Rohrbefestiger verbindbar ist, die sich nicht ungewollt voneinander lösen.

Diese Aufgabe wird durch die Merkmale des Anspruchs 1 gelöst. Der erfindungsgemäße Rohrbefestiger weist eine Verbindungseinrichtung und eine Gegenverbindungseinrichtung an einer gegenüberliegenden Seite auf, so dass die Verbindungseinrichtung formschlüssig mit der Gegenverbindungseinrichtung eines weiteren, baugleichen Rohrbefestigers in Eingriff bringbar ist, um die beiden Rohrbefestiger miteinander zu verbinden. Die Verbindungseinrichtung und die Gegenverbindungseinrichtung können auch als Teile einer Formschlusskupplung aufgefasst werden, die, wenn sie miteinander verbunden sind, formschlüssig so ineinander greifen, dass sie die beiden Rohrbefestiger vorzugsweise starr miteinander verbinden. Es lassen sich an sich beliebig viele Rohrbefestiger miteinander verbinden, wobei miteinander verbundene Rohrbefestiger in einer vorzugsweise geraden Reihe nebeneinander angeordnet sind, so dass Achsen von Rohren, die an oder in den Rohrbefestigern befestigt sind, parallel zueinander verlaufen. Sofern die Rohre gleiche Durchmesser oder allgemein gleiche Querschnitte aufweisen, befinden sich die ihre parallelen Achsen in einer Ebene. Sofern die Rohre verschiedene Durchmesser oder Querschnitte aufweisen, befinden sich ihre parallelen Achsen nicht unbedingt in einer gemeinsamen Ebene. In letzterem Fall sind die der Befestigung der Rohre dienenden Teile der Rohrbefestiger nicht unbedingt gleich, sondern es sind die der Verbindung mit weiteren Rohrbefestigern dienenden Teile der Rohrbefestiger, insbesondere die Verbindungseinrichtungen und die Gegenverbindungseinrichtungen baugleich.

Erfindungsgemäß lassen sich verbundene Rohrbefestiger nur durch gegeneinander Verschwenken voneinander lösen. Durch das Wort "nur" wird zum Ausdruck gebracht, dass zum Lösen verbundener Rohrbefestiger gegeneinander verschwenkt werden müssen. Eine zusätzliche translatorische Bewegung der Rohrbefestiger ist möglich, allerdings nicht zwingend. Die Verbindung von zwei Rohrbefestigern ist keine Verschraubung mit einer Drehung von mehr als 360°. Zum Lösen genügt ein Verschwenken der Rohrbefestiger gegeneinander um beispielsweise 90°. Kleinere oder größere Schwenkwinkel sind möglich, wobei der Schwenkwinkel vorzugsweise nicht mehr als 180° beträgt. Die Verbindungseinrichtung und die Gegenverbindungseinrichtung können beispielsweise vergleichbar einem Bajonettverschluss ausgeführt sein, wobei abweichend von einem Bajonettverschluss ein Verbinden und Lösen auch ohne Stecken und Herausziehen möglich sein kann. Das Verbinden der Rohrbefestiger erfolgt durch eine umgekehrte Bewegung/en wie das Lösen. Die Verbindungseinrichtung und die Gegenverbindungseinrichtung verbindet die Rohrbefestiger vorzugsweise starr oder aufgrund von Material- oder konstruktiver Elastizität elastisch miteinander.

Mit erfindungsgemäßen Rohrbefestigern lassen sich Rohre oder dergleichen parallel nebeneinander an beispielsweise einer Wand oder unter einer Decke befestigen. Werden die Rohrbefestiger miteinander verbunden, muss nicht jeder Rohrbefestiger befestigt werden, sondern es genügt einen oder einige der Rohrbefestiger an der Wand, Decke oder dergleichen zu befestigen, die die anderen Rohrbefestiger halten. Das ist insbesondere ein Vorteil, wenn Löcher zur Befestigung der Rohrbefestiger in die Wand, Decke oder allgemein den Befestigungsgrund gebohrt werden müssen und die Rohrbefestiger festgeschraubt werden. Weil sich die Rohrbefestiger nicht oder nur durch Verschwenken voneinander lösen lassen, lösen sich die Rohrbefestiger nicht unbeabsichtigt voneinander oder jedenfalls ist die Gefahr eines unbeabsichtigten Lösen der Rohrbefestiger voneinander gering.

Zu einem Lösen verbundener Rohrbefestiger voneinander sind die Verbindungseinrichtung und die Gegenverbindungseinrichtung einer Ausgestaltung der Erfindung so ausgestaltet, dass sie nur durch ein gegeneinander Verschwenken um eine zu der Rohrachse eines an einem der Rohrbefestiger befestigten Rohrs tangentialen Achse lösbar sind.

In bevorzugter Ausgestaltung der Erfindung sind die Verbindungseinrichtung und die Gegenverbindungseinrichtung identisch ausgebildet. Diese Ausgestaltung der Erfindung ermöglicht baugleiche Rohrbefestiger, bei deren Verbinden nicht darauf geachtet werden muss, welche Seiten der Rohrbefestiger einander zugewandt sind, weil die Verbindungseinrichtungen auf beiden Seiten der Rohrbefestiger identisch sind.

Zu einer Befestigung an einer Wand, Decke oder dergleichen Befestigungsgrund sieht eine Ausgestaltung der Erfindung ein Schraubloch, beispielsweise ein Durchgangsloch beispielsweise in einem Sockel des Rohrbefestigers zu einer Befestigung mittels einer durchgesteckten Schraube vor. Eine Achse des Schraublochs verläuft insbesondere radial zu der Rohrachse eines an dem Rohrbefestiger befestigten Rohrs oder eventuell parallel zu einer solchen Radialen. Möglich ist auch, dass die Achse des Schraublochs radial oder tangential zu der Achse verläuft, um die verbundene Rohrbefestiger gegeneinander verschwenkt werden müssen, um sie voneinander zu lösen.

Zur Ausbildung der Verbindungseinrichtung und der Gegenverbindungseinrichtung sieht eine Ausgestaltung einen Finger an der einen Seite des Rohrbefestigers als Verbindungseinrichtung oder als Teil der Verbindungseinrichtung und/oder eine Hinterschneidung an der gegenüberliegenden Seite des Rohrbefestigers als Gegenverbindungseinrichtung oder als Teil der Gegenverbindungseinrichtung vor. Die Hinterschneidung kann eine Innenfläche einer Wandung an der gegenüberliegenden Seite des Rohrbefestigers sein. Zu verbindende Rohrbefestiger werden mit den Seiten, die den Finger beziehungsweise die Hinterschneidung aufweisen, aneinander angelegt und gegeneinander verschwenkt, so dass der Finger in Hintergriff an der Hinterschneidung gelangt und die Rohrbefestiger verbindet. Sind die Verbindungseinrichtung und die Gegenverbindungseinrichtung identisch ausgebildet, weisen die Rohrbefestiger an beiden gegenüberliegenden Seiten einen Finger und eine Hinterschneidung auf. Werden die Rohrbefestiger mit ihren Seiten aneinander angelegt und gegeneinander verschwenkt, gelangt der Finger des einen Rohrbefestigers in Hintergriff an der Hinterschneidung des anderen Rohrbefestigers und umgekehrt.

Eine Weiterbildung der Erfindung sieht vor, dass sich der Finger der Verbindungseinrichtung auf einer Seite einer Radialmittelebene des Rohrbefestigers radial zu der Achse eines an dem Rohrbefestiger befestigten Rohrs befindet, das heißt der Finger steht nicht über die Radialsmittelebene des Rohrbefestigers über.

Eine Ausgestaltung der Erfindung sieht einen in Ansicht auf die Seite des Rohrbefestigers, an der sich die Verbindungseinrichtung befindet, L-förmigen Finger vor. Eine Seite eines Schenkels des "L" kann bündig mit einer Befestigungsseite des Rohrbefestigers sein, mit der der Rohrbefestiger zur Befestigung an einer ebenen Oberfläche des Befestigungsgrunds vorgesehen ist. Ein zu der Befestigungsseite paralleler Schenkel des "L" kann mit einer Abwinklung senkrecht zu einer von dem "L" aufgespannten Ebene in den Rohrbefestiger übergehen. Dadurch ist eine Befestigung des L-förmigen Fingers in einem Abstand von der Seite des Rohrbefestigers, an der sich die Verbindungseinrichtung befindet, möglich. Der Abstand des Fingers von der Seite des Rohrbefestigers ist insbesondere so groß wie die Wanddicke des Rohrbefestigers an der gegenüberliegenden Seite, deren Innenfläche die Hinterschneidung der Gegenverbindungseinrichtung bildet, die der Finger hintergreift, wenn zwei Rohrbefestiger miteinander verbunden sind. Ein Ende eines Schenkels des L-förmigen Fingers kann eine Schräge aufweisen. Die Merkmale dieses Absatzes können bei Ausgestaltungen der Erfindung einzeln oder in beliebiger Kombination verwirklicht sein.

Vorzugsweise ist der Rohrbefestiger ein Rohrclip, das heißt er ist so ausgebildet, dass ein Rohr oder dergleichen zur Befestigung in ihn einschnappbar ist.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:
- Figur 1: einen Rohrbefestiger gemäß der Erfindung in Ansicht;
- Figur 2: den Rohrbefestiger aus Figur 1 von oben;
- Figur 3: den Rohrbefestiger aus Figuren 1 und 2 in Seitenansicht;
- Figur 4: den Rohrbefestiger aus Figuren 1 bis 3 von unten;
- Figur 5: den Rohrbefestiger aus Figuren 1 bis 4 in einer perspektivischen Darstellung;
- Figuren 6 bis 8: zwei der Rohrbefestiger aus Figuren 1 bis 5 bei einem Zusammensetzen und Verbinden in aufeinanderfolgenden Schritten; und
- Figuren 9 und 10: die beiden Rohrbefestiger aus Figuren 6 bis 9 in verbundenem Zustand.

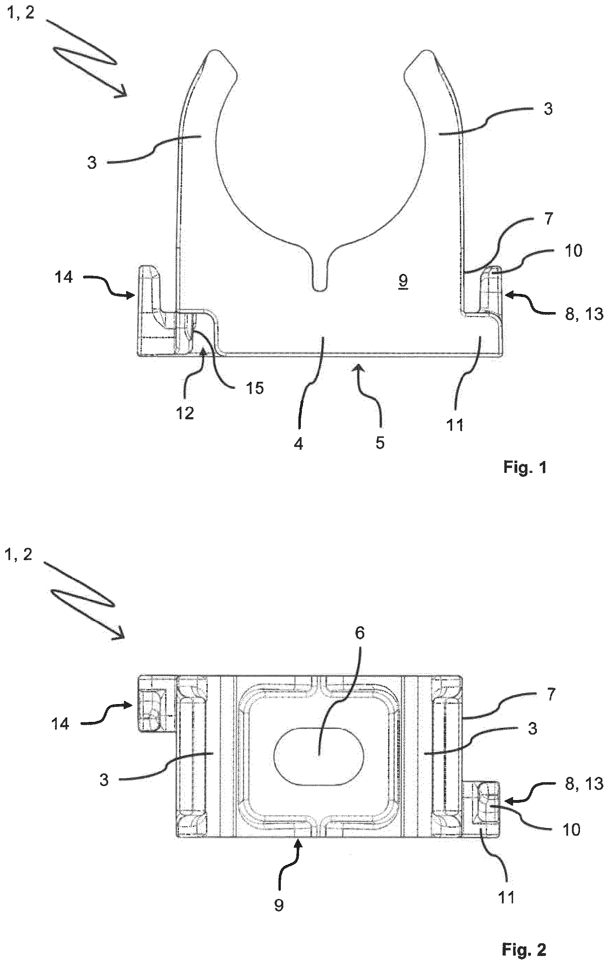

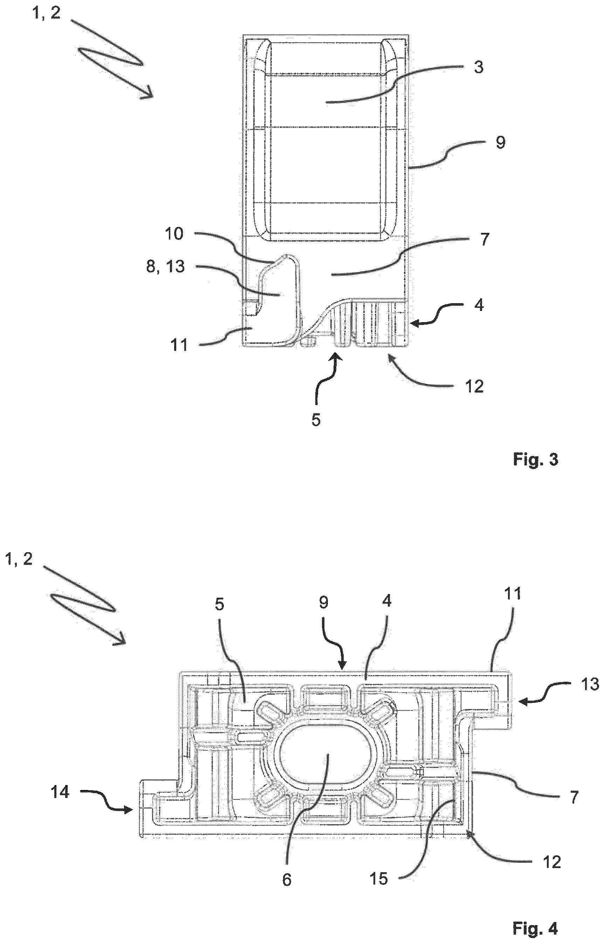

Der in Figuren 1 bis 5 dargestellte, erfindungsgemäße Rohrbefestiger 1 ist einstückig durch Spritzgießen aus Kunststoff hergestellt, wobei weder die Herstellung durch Spritzgießen noch die Herstellung aus Kunststoff noch die Einstückigkeit zwingend für die Erfindung sind. Im Ausführungsbeispiel ist der Rohrbefestiger 1 als Rohrclip 2 ausgebildet, das heißt er weist zwei im Ausführungsbeispiel bogenförmige Federschenkel 3 auf, die ein nicht dargestelltes, zu befestigendes, zwischen die beiden Federschenkel 3 eingeschnapptes Rohr auf mehr als 180° umschließen, so dass es durch Formschluss gegen radiales Herausfallen gehalten ist. Zum Befestigen wird das nicht dargestellte Rohr zwischen die beiden Federschenkel 3 gedrückt ("eingeschnappt"), wobei die beiden Federschenkel 3 elastisch so weit auseinander federn, dass das Rohr zwischen sie gelangt. Ein Ausschnappen durch Herausziehen des Rohrs ist in umgekehrter Richtung möglich. Es lässt sich auch ein Leerrohr, ein Kabel oder ein sonstiger länglicher Gegenstand zwischen die beiden Federschenkel 3 des Rohrbefestigers 1 einschnappen. Für andere als kreisförmige Querschnitte kann die Form der Federschenkel 3 angepasst sein (nicht dargestellt).

Der Rohrbefestiger 1 weist einen näherungsweise quaderförmigen, hohlen Sockel 4 auf, der an einer Befestigungsseite 5 offen ist. Die beiden bogenförmigen Federschenkel 3 stehen symmetrisch von einer der Befestigungsseite 5 gegenüberliegenden Seite des Sockels 4 ab.

Ein Langloch als Schraubloch 6 im Sockel 4 ermöglicht ein Anschrauben des Rohrbefestigers 1 mit einer durch das Schraubloch 6 durchgesteckten, nicht gezeichneten Schraube an einer Wand, Decke oder allgemein an einem Befestigungsgrund mit der Befestigungsseite 5 des Rohrbefestigers 1 an dem Befestigungsgrund anliegend.

An zwei einander gegenüberliegenden Seiten 7, die senkrecht an die Befestigungsseite 5 angrenzen und parallel zu einer Rohrachse eines zwischen die Federschenkel 3 eingeschnappten Rohrs verlaufen, weist der Rohrbefestiger 1 jeweils einen Finger 8 auf, der eine Verbindungseinrichtung 9 bildet oder Teil einer Verbindungseinrichtung 9 ist. In Ansicht senkrecht auf die Seite 7 des Rohrbefestigers 1 gesehen ist der Finger 8 L-förmig, wobei das "L" parallel zu der Seite 7 des Rohrbefestigers 1 und in einem Abstand von der Seite 7 angeordnet ist, der einer Wanddicke der Seite 7 des Rohrbefestigers 1 im Bereich des Sockels 4 beziehungsweise in einem an die Befestigungsseite 5 anschließenden Bereich entspricht.

Ein kurzer Schenkel des L-förmigen Fingers 8 verläuft parallel zur Befestigungsseite 5 des Rohrbefestigers 1 und weist eine mit der Befestigungsseite 5 bündige Seite auf.

In Ansicht auf die Seite 7 des Rohrbefestigers 1 gesehen ist der L-förmige Finger 8 ungefähr 1/3 so breit wie die Seite 7.

Ein langer Schenkel des L-förmigen Fingers 8 erstreckt sich senkrecht zur Befestigungsseite 5 des Rohrbefestigers 1 nach oben, das heißt in Richtung des einen Federschenkels 3 auf dieser Seite 7 des Rohrbefestigers 1. Der lange Schenkel des L-förmigen Fingers 8 verläuft parallel zu der Seite 7 und parallel zu einer Stirnseite 9 des Rohrbefestigers 1, die senkrecht an die Seite 7 und an die Befestigungsseite 5 angrenzt.

Senkrecht auf die Seite 7 des Rohrbefestigers 1 gesehen ist der lange Schenkel des L-förmigen Fingers 8 um eine Wanddicke der Stirnseite 9 gegenüber der Stirnseite 9 nach innen, das heißt in Richtung einer gegenüberliegenden Stirnseite 9 des Rohrbefestigers 1 versetzt.

Ein der Befestigungsseite 5 fernes, freies Ende des langen Schenkels des L-förmigen Fingers 8 weist eine Schräge 10 auf, die der Befestigungsseite 5 abgewandt und der Stirnseite 9 zugewandt ist.

Ein kurzer Schenkel des L-förmigen Fingers 8 geht mit einer Abwinklung 11 einstückig in die Seite 7 des Rohrbefestigers 1 über. Die Abwinklung 11 ist rechtwinklig zu einer von dem "L" aufgespannten Fläche und bündig mit der Stirnseite 9 des Rohrbefestigers 1.

An der Stirnseite 9, die der Stirnseite 9 gegenüber liegt, an der sich die Abwinklung 11 des L-förmigen Fingers 8 befindet, weist die Seite 7 eine Aussparung 12 an der Befestigungsseite 5 auf. Die Aussparung 12 ist senkrecht zur Befestigungsseite 5 so hoch wie die Abwinklung 11 des Fingers 8. Sie weist einen zur Befestigungsseite 5 parallelen Rand auf, der in einer Mitte der Seite 7 S-förmig geschwungen zur Befestigungsseite 5 verläuft. In der der Abwinklung 11 gegenüberliegenden Stirnseite 9 ist die Aussparung so breit wie die Abwinklung 11 von der Seite 7 absteht.

Die L-förmigen Finger 8 mit ihren Abwinklungen 11 und die Aussparungen 12 sind an beiden gegenüberliegenden Seiten 7 des Rohrbefestigers 1 identisch, das heißt senkrecht auf die jeweilige Seite 7 gesehen sind die L-förmigen Finger 8 und die Aussparungen 12 - im Ausführungsbeispiel - gleich und nicht spiegelbildlich. Dadurch sind die L-förmigen Finger 8 und die Aussparungen 12 nebeneinander mit ihren Seiten 7 aneinander anliegend angeordneter Rohrbefestiger 1 spiegelbildlich.

Die L-förmigen Finger 8 und die Aussparungen 12 an den gegenüberliegenden Seiten 7 des Rohrbefestigers 1 bilden eine Verbindungseinrichtung 13 und eine identische Gegenverbindungseinrichtung 14, mit denen mehrere Rohrbefestiger 1 in einer geraden Reihe nebeneinander mit ihren Seiten 7 aneinander anliegend formschlüssig miteinander verbindbar sind.

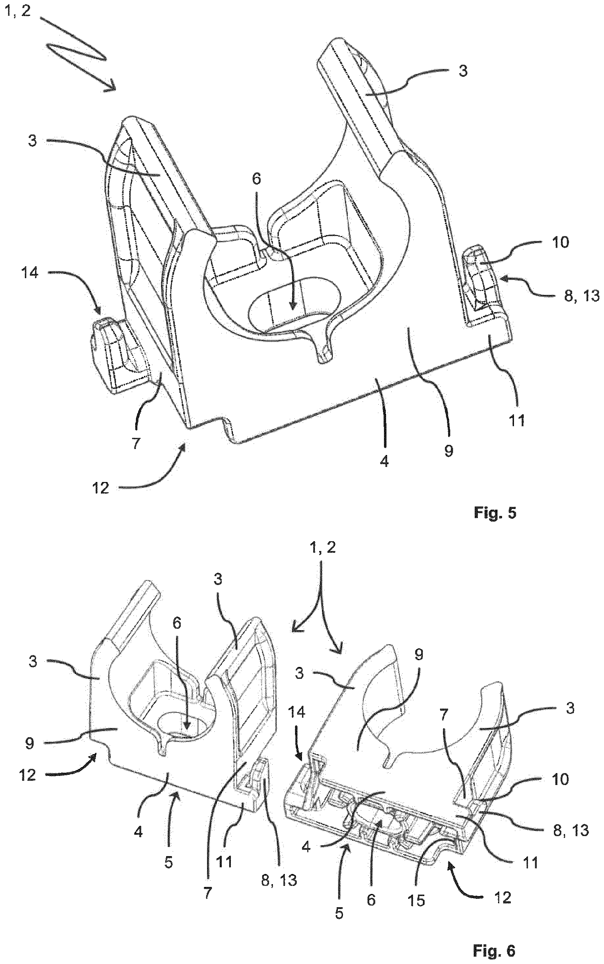

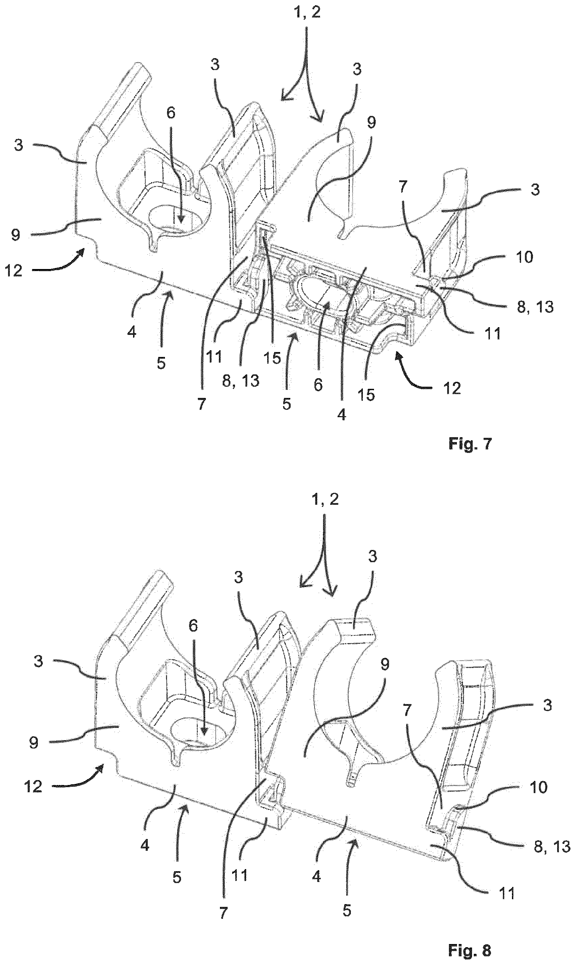

Die Figuren 6 bis 8 zeigen aufeinanderfolgende Schritte des Verbindens zweier baugleicher beziehungsweise identischer, erfindungsgemäßer Rohrbefestiger 1: zum Verbinden werden zwei Rohrbefestiger 1 um 90° gegeneinander verschwenkt so angeordnet, dass ihre die L-förmigen Finger 8 und die Aussparungen 12 aufweisenden Seiten 7 einander zugewandt sind. Um 90° gegeneinander verschwenkt bedeutet, dass die Befestigungsseiten 5, die Stirnseiten 9 und die Federschenkel 3 der beiden Rohrbefestiger 1 um 90° gegeneinander verschwenkt sind. Die beiden Rohrbefestiger 1 werden einander genähert, bis ihre Seiten 7 aneinander anliegen. Diese Stellung zeigt Figur 7. Jetzt werden die beiden Rohrbefestiger 1 um 90° gegeneinander verschwenkt, so dass ihre Befestigungsseiten 5 und Stirnseiten 9 parallel und bündig miteinander, das heißt jeweils in einer Ebene miteinander sind. Beim Verschwenken gelangen die langen Schenkel der L-förmigen Finger 8 der beiden Rohrbefestiger 1 in Hintergriff an der Seite 7 jeweils des benachbarten Rohrbefestigers 1, wie es in Figur 8 zu sehen ist. Innenseiten der Seiten 7 der Sockel 8 der Rohrbefestiger 1 bilden Hinterschneidungen 15, die Teil der Verbindungseinrichtungen 13 und der identischen Gegenverbindungseinrichtungen 14 sind und die bei verbundenen Rohrbefestigern 1 wechselseitig jeweils vom langen Schenkel des L-förmigen Fingers 8 eines benachbarten Rohrbefestigers 1 hintergriffen werden.

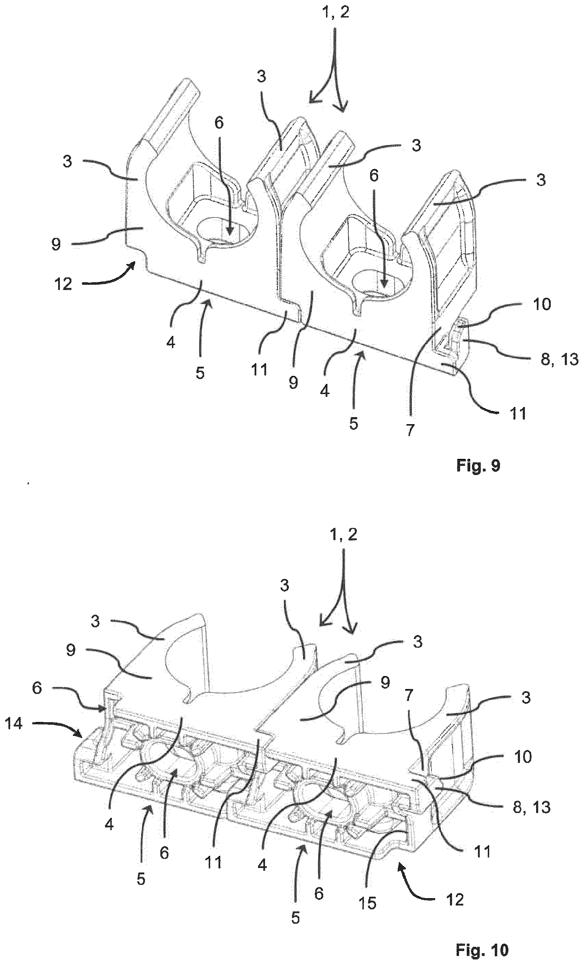

Die Figuren 9 und 10 zeigen zwei durch Formschluss ihrer Verbindungseinrichtung 13 und identischen Gegenverbindungseinrichtung 14 verbundene erfindungsgemäße Rohrbefestiger 1. Es lassen sich grundsätzlich beliebig viele Rohrbefestiger 1 formschlüssig miteinander verbinden, so dass sie in einer geraden Reihe mit bündigen Befestigungsseiten 5 und bündigen Stirnseiten 9 nebeneinander angeordnet sind. Rohrachsen nicht dargestellter, zwischen die Federschenkel 3 der verbundenen Rohrbefestiger 1 eingeschnappter Rohre verlaufen parallel in einer gemeinsamen und zur Befestigungsseite 5 parallelen Ebene.

Um die Rohrbefestiger 1 voneinander zu lösen müssen sie entgegengesetzt wie zum Verbinden um 90° gegeneinander verschwenkt werden. Durch ihre Verbindung miteinander müssen nicht alle Rohrbefestiger 1 an dem Befestigungsgrund befestigt werden, sondern es genügt eine Befestigung beispielsweise jedes zweiten, dritten oder fünften Rohrbefestigers 1. Verbindbar sind auch Rohrbefestiger 1 für unterschiedliche Rohrdurchmesser, deren Verbindungseinrichtungen 13 und Gegenverbindungseinrichtungen 14 identisch und wie beschrieben und wie dargestellt ausgebildet sind (nicht dargestellt).

## Patentansprüche

1. Rohrbefestiger zu einer Befestigung eines Rohrs an einem Befestigungsgrund, wobei der Rohrbefestiger (1) eine Verbindungseinrichtung (13) aufweist, die mit einer Gegenverbindungseinrichtung (14) eines weiteren Rohrbefestigers (1) durch einen Formschluss der Verbindungseinrichtung (13) mit der Gegenverbindungseinrichtung (14) verbindbar ist, wodurch die Rohrbefestiger (1) miteinander verbindbar sind derart, dass sie nebeneinander angeordnet sind, wobei Rohrachsen an den Rohrbefestigern (1) befestigter Rohre parallel verlaufen, und wobei der Rohrbefestiger (1) die Verbindungseinrichtung (13) an einer Seite und eine Gegenverbindungseinrichtung (14) an einer gegenüberliegenden Seite aufweist, so dass mehrere baugleiche Rohrbefestiger (1) lösbar miteinander verbindbar sind, so dass sie in einer geraden Reihe nebeneinander angeordnet sind, wobei Rohrachsen an den Rohrbefestigern (1) befestigter Rohre parallel und vorzugsweise in einer Ebene verlaufen, **dadurch gekennzeichnet, dass** die Verbindungseinrichtung (13) des Rohrbefestigers (1) durch Verschwenken des Rohrbefestigers (1) in Bezug auf den weiteren Rohrbefestiger (1) mit der Gegenverbindungseinrichtung (14) des weiteren Rohrbefestigers (1) verbindbar und nur durch Verschwenken des Rohrbefestigers (1) in Bezug auf den weiteren Rohrbefestiger (1) von der Gegenverbindungseinrichtung (14) lösbar ist.

2. Rohrbefestiger nach Anspruch 1, **dadurch gekennzeichnet, dass** die Verbindungseinrichtung (13) nur durch Verschwenken um eine zu der Rohrachse eines an dem Rohrbefestiger (1) befestigten Rohrs tangentiale Achse von der Gegenverbindungseinrichtung (14) lösbar ist.

3. Rohrbefestiger nach Anspruch 1 oder 2, **dadurch gekennzeichnet, dass** die Gegenverbindungseinrichtung (14) identisch mit der Verbindungseinrichtung (13) ist.

4. Rohrbefestiger nach einem oder mehreren der Ansprüche 1 bis 3, **dadurch gekennzeichnet, dass** der Rohrbefestiger (1) ein Schraubloch (6) zur Befestigung an dem Befestigungsgrund aufweist.

5. Rohrbefestiger nach Anspruch 2 und/oder 4, **dadurch gekennzeichnet, dass** eine Achse des Schraublochs (6) radial zu der Rohrachse eines an dem Rohrbefestiger (1) befestigten Rohrs undloder radial oder tangential zu der Achse, um die verbundene Rohrbefestiger (1) zum Lösen gegeneinander verschwenkt werden müssen, verläuft.

6. Rohrbefestiger nach einem oder mehreren der vorhergehenden Ansprüche, **dadurch gekennzeichnet, dass** die Verbindungseinrichtung (13) einen Finger (8) an einer zu der Rohrachse eines an dem Rohrbefestiger (1) befestigten Rohrs parallelen Seitenfläche (7) und die Gegenverbindungseinrichtung (14) eine Hinterschneidung (15) an einer gegenüberliegenden Seite (7) aufweist, und dass der Finger (8) durch das Verschwenken des Rohrbefestigers (1) in Bezug auf den weiteren, bauglichen Rohrbefestiger (1) in einen Hintergriff an der Hinterschneidung (15) der Gegenverbindungseinrichtung (14) des weiteren Rohrbefestigers (1) bringbar ist.

7. Rohrbefestiger nach Anspruch 6, **dadurch gekennzeichnet, dass** der Finger (8) auf einer Seite einer Radialmittelebene des Rohrbefestigers (1) radial zu der Rohrachse eines an dem Rohrbefestiger (1) befestigten Rohrs angeordnet ist.

8. Rohrbefestiger nach Anspruch 6 oder 7, **dadurch gekennzeichnet, dass** der Finger (8) in Ansicht auf die Seite des Rohrbefestigers (1), an der sich die Verbindungseinrichtung (13) befindet, L-förmig ist.

9. Rohrbefestiger nach einem oder mehreren der Ansprüche 6 bis 8, **dadurch gekennzeichnet, dass** der Finger (8) mit einer Abwinklung (11) in die Seite (7) des Rohrbefestigers (1) übergeht, die die Verbindungseinrichtung (13) aufweist, so dass der Finger (8) einen Abstand von der Seite (7) des Rohrbefestigers aufweist.

10. Rohrbefestiger nach einem oder mehreren der Ansprüche 6 bis 9, **dadurch gekennzeichnet, dass** der Finger (8) eine mit der Befestigungsfläche (5) des Rohrbefestigers (1) bündige Seite aufweist.

11. Rohrbefestiger nach einem oder mehreren der Ansprüche 6 bis 10, **dadurch gekennzeichnet, dass** der Finger (8) eine Schräge (10) an einem freien Ende aufweist.

12. Rohrbefestiger nach einem oder mehreren der vorhergehenden Ansprüche, **dadurch gekennzeichnet, dass** der Rohrbefestiger (1) eine an die Befestigungsseite (5) angrenzende Aussparung (12) in der Seite (7) aufweist, die Teil der Verbindungseinrichtung (13) undloder der Gegenverbindungseinrichtung (14) ist.

13. Rohrbefestiger nach einem oder mehreren der vorhergehenden Ansprüche, **dadurch gekennzeichnet, dass** der Rohrbefestiger (1) ein Rohrclip (2) ist.

## Claims

1. A pipe fastener for fastening a pipe to an attachment base, the pipe fastener (1) comprising a connecting device (13), which can be connected to a mating connecting device (14) of a further pipe fastener (1) by form fit of the connecting device (13) with the mating connecting device (14), whereby the pipe fasteners (1) can be connected to one another so as to be disposed next to one another, pipe axes at the pipe fasteners (1) of attached pipes extending parallel, and the pipe fastener (1) comprising the connecting device (13) on one side and a mating connecting device (14) on an opposite side, so that a plurality of identically constructed pipe fasteners (1) can be detachably connected to one another so as to be disposed next to one another in a straight row, pipe axes at the pipe fasteners (1) of fastened pipes extending parallel and preferably in one plane, **characterized in that** the connecting device (13) of the pipe fastener (1) can be connected to the mating connecting device (14) of the further pipe fastener (1) by pivoting of the pipe fastener (1) with respect to the further pipe fastener (1) and can only be detached from the mating connecting device (13) by pivoting of the pipe fastener (1) with respect to the further pipe fastener (1).

2. The pipe fastener according to claim 1, **characterized in that** the connecting device (13) can only be detached from the mating connecting device (14) by pivoting about an axis tangential with respect to the pipe axis of a pipe fastened at the pipe fastener (1).

3. The pipe fastener according to claim 1 or 2, **characterized in that** the mating connecting device (14) is identical to the connecting device (13).

4. A pipe fastener according to any one or more of claims 1 to 3, **characterized in that** the pipe fastener (1) has a screw hole (6) for the attachment to the attachment base.

5. A pipe fastener according to claim 2 and/or 4, **characterized in that** an axis of the screw hole (6) extends radially with respect to the pipe axis of a pipe fastened to the pipe fastener (1) and/or radially or tangentially with respect to the axis about which the connected pipe fasteners (1) must be pivoted relative to one another for detachment.

6. A pipe fastener according to any one or more of the preceding claims, **characterized in that** the connecting device (13) comprises a finger (8) on a side surface (7) that is parallel to the pipe axis of a pipe fastened to the pipe fastener (1), and the mating connecting device (14) has an undercut (15) on an opposite side (7), and that the finger (8) can latchingly engage the undercut (15) of the mating connecting device (14) of the further pipe fastener (1) by the pivoting of the pipe fastener (1) with respect to the further, identically constructed pipe fastener (1).

7. The pipe fastener according to claim 6, **characterized in that** the finger (8) is disposed on a side of a radial center plane of the pipe fastener (1) radial with respect to the pipe axis of a pipe fastened to the pipe fastener (1).

8. The pipe fastener according to claim 6 or 7, **characterized in that** the finger (8) is L-shaped, as viewed looking at the side of the pipe fastener (1) on which the connecting device (13) is located.

9. A pipe fastener according to any one or more of claims 6 to 8, **characterized in that** the finger (8) transitions with an angled section (11) into the side (7) of the pipe fastener (1) which comprises the connecting device (13), so that the finger (8) is spaced apart from the side (7) of the pipe fastener.

10. A pipe fastener according to any one or more of claims 6 to 9, **characterized in that** the finger (8) has a side that is flush with the attachment surface (5) of the pipe fastener (1).

11. A pipe fastener according to any one or more of claims 6 to 10, **characterized in that** the finger (8) has a chamfer (10) at a free end.

12. A pipe fastener according to any one or more of the preceding claims, **characterized in that** the pipe fastener (1) has a recess (12), adjoining the attachment side (5), in the side (7) that is part of the connecting device (13) and/or of the mating connecting device (14).

13. A pipe fastener according to any one or more of the preceding claims, **characterized in that** the pipe fastener (1) is a pipe clip (2).

## Revendications

1. Dispositif de fixation de tube pour une fixation d'un tube sur une base de fixation, le dispositif (1) de fixation de tube présentant un dispositif de liaison (13) qui est apte à être relié à un dispositif complémentaire (14) de liaison d'un autre dispositif (1) de fixation de tube par une liaison par complémentarité de forme du dispositif de liaison (13) avec le dispositif complémentaire (14) de liaison, de sorte que les dispositifs (1) de fixation de tube sont aptes à être reliés les uns aux autres de telle sorte qu'ils soient agencés les uns à côté des autres, les axes des tubes fixés aux dispositifs (1) de fixation de tube s'étendant parallèlement, et le dispositif (1) de fixation de tube présentant le dispositif de liaison (13) sur un côté et un dispositif complémentaire (14) de liaison sur un côté opposé, de sorte que plusieurs dispositifs (1) de fixation de tubes ayant une construction identique sont aptes à être reliés entre eux de manière amovible, de sorte qu'ils soient agencés les uns à côté des autres en une rangée droite, les axes des tubes fixés aux dispositifs (1) de fixation de tube s'étendant parallèlement et de préférence dans un plan, **caractérisé en ce que** le dispositif de liaison (13) du dispositif (1) de fixation de tube est apte à être relié au dispositif complémentaire (14) de liaison de l'autre dispositif (1) de fixation de tube par pivotement du dispositif (1) de fixation de tube par rapport à l'autre dispositif (1) de fixation de tube, et n'est apte à être détaché du dispositif complémentaire (14) de liaison que par pivotement du dispositif (1) de fixation de tube par rapport à l'autre dispositif (1) de fixation de tube.

2. Dispositif de fixation de tube selon la revendication 1, **caractérisé en ce que** le dispositif de liaison (13) ne peut être détaché du dispositif complémentaire (14) de liaison que par pivotement autour d'un axe tangent à l'axe de tube d'un tube fixé au dispositif (1) de fixation de tube.

3. Dispositif de fixation de tube selon la revendication 1 ou la revendication 2, **caractérisé en ce que** le dispositif complémentaire (14) de liaison est identique au dispositif de liaison (13).

4. Dispositif de fixation de tube selon une ou plusieurs des revendications 1 à 3, **caractérisé en ce que** le dispositif (1) de fixation de tube présente un trou à vis (6) pour une fixation sur la base de fixation.

5. Dispositif de fixation de tube selon la revendication 2 et/ou 4, **caractérisé en ce qu'**un axe du trou à vis (6) s'étend radialement par rapport à l'axe de tube d'un tube fixé au dispositif (1) de fixation de tube et/ou radialement ou tangentiellement par rapport à l'axe autour duquel des dispositifs (1) de fixation de tube reliés doivent être pivotés l'un par rapport à l'autre pour être libérés.

6. Dispositif de fixation de tube selon une ou plusieurs des revendications précédentes, **caractérisé en ce que** le dispositif de liaison (13) comprend un doigt (8) sur une face latérale (7) parallèle à l'axe d'un tube fixé au dispositif (1) de fixation de tube et le dispositif complémentaire (14) de liaison comprend une contre-dépouille (15) sur un côté opposé (7), et **en ce que** le doigt (8) est apte à être engagé en arrière de la contre-dépouille (15) du dispositif complémentaire (14) de liaison de l'autre dispositif (1) de fixation de tube par le pivotement du dispositif (1) de fixation de tube par rapport à l'autre dispositif (1) de fixation de tube.

7. Dispositif de fixation de tube selon la revendication 6, **caractérisé en ce que** le doigt (8) est agencé sur un côté d'un plan médian radial du dispositif (1) de fixation de tube, radialement par rapport à l'axe de tube d'un tube fixé au dispositif (1) de fixation de tube.

8. Dispositif de fixation de tube selon la revendication 6 ou la revendication 7, **caractérisé en ce que** le doigt (8) est en forme de L lorsqu'il est vu du côté du dispositif (1) de fixation de tube sur lequel se trouve le dispositif de liaison (13).

9. Dispositif de fixation de tube selon une ou plusieurs des revendications 6 à 8, **caractérisé en ce que** le doigt (8) se prolonge par un coude (11) sur le côté (7) du dispositif (1) de fixation de tube comportant le dispositif de liaison (13), de sorte que le doigt (8) est espacé du côté (7) du dispositif de fixation de tube.

10. Dispositif de fixation de tube selon une ou plusieurs des revendications 6 à 9, **caractérisé en ce que** le doigt (8) présente une face affleurant la face de fixation (5) du dispositif (1) de fixation de tube.

11. Dispositif de fixation de tube selon une ou plusieurs des revendications 6 à 10, **caractérisé en ce que** le doigt (8) présente un biseau (10) à une extrémité libre.

12. Dispositif de fixation de tube selon une ou plusieurs des revendications précédentes, **caractérisé en ce que** le dispositif (1) de fixation de tube comporte un évidement (12) dans la face (7) adjacente à la face de fixation (5), faisant partie du dispositif de liaison (13) et/ou du dispositif complémentaire (14) de liaison.

13. Dispositif de fixation de tube selon une ou plusieurs des revendications précédentes, **caractérisé en ce que** le dispositif (1) de fixation de tube est un clip à tube (2).
